# EUROPÄISCHE PATENTSCHRIFT

(11) **EP 3 122 943 B1**
(45) Veröffentlichungstag und Bekanntmachung des Hinweises auf die Patenterteilung: **31.01.2018**
(21) Anmeldenummer: 15719443.2
(22) Anmeldetag: 22.04.2015
(51) Int. Cl.: E02B 17/08, F16H 57/025, E02B 17/00, F16H 57/02, F16H 19/04, F16H 1/28, B66F 3/44, B66F 3/02

(54) **HUBSCHIFF-GETRIEBEPAAR**
JACK-UP VESSEL GEAR PAIR
PAIRE D'ENGRENAGES POUR UN NAVIRE AUTO-ÉLÉVATEUR

(30) Priorität: 08.05.2014 EP 14167457
(43) Veröffentlichungstag der Anmeldung: 01.02.2017
(73) Patentinhaber: Flender GmbH, 46395 Bocholt (DE)
(72) Erfinder: FENNIS, Ronald, NL-7104 AS Winterswijk (NL); HULSHOF, Frans, NL-7102 KD Winterswijk (NL)
(74) Vertreter: Maier, Daniel Oliver
(86) Internationale Anmeldenummer: PCT/EP2015/058662
(87) Internationale Veröffentlichungsnummer: WO 2015/169594

(56) Entgegenhaltungen:
- DE-A1- 10 026 840
- DE-A1- 19 521 205
- US-A- 4 678 165

## Beschreibung

Die vorliegende Erfindung betrifft ein Hubschiff-Getriebepaar nach dem Oberbegriff des Anspruchs 1.

Ein derartiges Hubschiff-Getriebepaar ist bekannt aus der US 4,678,165 A (Rauma-Repola Oy) 07.07.1987.

Der Erfindung liegt die Aufgabe zugrunde, das Hubschiff-Getriebepaar nach dem Oberbegriff des Anspruchs 1 zu verbessern.

Diese Aufgabe wird gelöst durch die kennzeichnenden Merkmale des Anspruchs 1.

Erfindungsgemäß ist das Hubschiff-Getriebepaar für einen Zahnstangenantrieb zum Absenken und Anheben eines Jack-up-Beins eines Hubschiffes vorgesehen. Das Getriebepaar umfasst dabei zwei als Untersetzungsgetriebe wirkende Getriebeeinheiten mit jeweils einer An- und Abtriebswelle. Die Antriebswellen sind jeweils zur Verbindung mit einem Antrieb, z.B. einem Elektromotor oder einem hydraulischen Motor, vorgesehen. Die Abtriebswellen sind jeweils zur Verbindung mit einem Triebstockritzel zum Eingriff in eine von zwei an dem Jack-up-Bein montierten Zahnstangen vorgesehen. Die Abtriebswellen beider Getriebeeinheiten weisen dabei gegenläufige Drehrichtungen auf. Jede Getriebeeinheit weist eine in einem Getriebegehäuse gelagerte Planetenstufe auf. Jede Getriebeeinheit stützt sich mithilfe einer Drehmomentstütze an der jeweils anderen Getriebeeinheit ab. Die Drehmomentstütze jeder Getriebeeinheit umgreift das Getriebegehäuse der jeweils anderen Getriebeeinheit zangenförmig. Die Drehmomentstütze jeder Getriebeeinheit stützt sich am Getriebegehäuse der jeweils anderen Getriebeeinheit symmetrisch zu einer Verbindungsgeraden der Abtriebswellen in zwei Abstützpunkten ab. Die Abstützpunkte liegen bezüglich einer Vertikalebene, die durch die Abtriebswelle der jeweils anderen Getriebeeinheit verläuft, zu der die Drehmomentstütze aufweisenden Getriebeeinheit hin.

Unter dem Begriff "Hubschiffe" werden hier so genannte Jack-up-Schiffe und Hubinseln bzw. -plattformen zusammengefasst. Unter einem Jack-up-Schiff wird dabei ein Schiff mit eigenem Antrieb verstanden, das absenkbare Standbeine (so genannte Jack-up-Legs) aufweist, auf denen es auf einem Gewässergrund aufgestellt werden kann. Unter einer Hubinsel bzw. -plattform wird eine schwimmfähige Plattform ohne eigenen Antrieb verstanden, die absenkbare Standbeine aufweist, auf denen sie auf einem Gewässergrund aufgestellt werden kann. Hubschiffe werden beispielsweise zur Errichtung von Offshore-Windenergieanlagen oder als Offshore-Bohrplattformen zur Förderung von Erdöl oder Erdgas eingesetzt.

Unter einer Hubvorrichtung für ein absenkbares Standbein eines Hubschiffes wird eine Vorrichtung verstanden, mittels derer das Standbein zu dem Gewässerboden abgesenkt und von dort angehoben werden kann.

Die eingangs genannte Patentschrift US 4,678,165 A beschreibt ein System einer Drehmomentabstützung von zwei parallelen, horizontal gegenüberliegenden Planetengetrieben mit gegenläufiger Drehrichtung der Ausgangswellen als Antrieb einer Zahnstange mit beidseitigem Triebstockritzel, wobei die Drehmomentstützen dieser beiden Getrieben senkrecht stehen und mittels Kuppelstangen miteinander verbunden sind. Jedes Getriebe treibt als Einzelantrieb ein Triebstockritzel an, wobei zwei Triebstockritzel nebeneinander und mehrere übereinander in einem sogenannten Hubgerüst, d.h. einer Tragstruktur zur Lagerung der Getriebe, angeordnet sind. Dabei bilden die Drehachsen der beiden Getrieben zusammen mit den beiden Gelenkpunkten der miteinander gekoppelten Drehmomentstützen ein Rechteck, dass unter dem Einfluss der Drehmomente und hieraus abgeleiteten Reaktionskräfte in ein Parallelogramm verschoben werden kann, um so gleiche Drehmomente in beiden Triebstockritzeln und damit in beiden Getrieben zu erzielen. Die Koppelstange zwischen den beiden Drehmomentstützen kann sowohl Druckkräfte wie Zugkräfte aufnehmen. Sie wirkt jedoch nur, wenn Drehmomente anstehen.

Bei ungleichen Drehmomenten in beiden Ritzeln findet eine Drehbewegung der beiden Getriebegehäuse und der hiermit fest verbundenen Drehmomentstützen um die Mittenachsen der Ausgangswellen statt, wodurch ein Triebstockritzel bezogen auf sein Getriebe voreilt, und das andere Triebstockritzel bezogen auf sein Getriebe nacheilt. Man könnte auch sagen, dass in einem Getriebe hierbei die Übersetzung kurzzeitig größer und im benachbarten Getriebe zeitgleich kurzzeitig kleiner wird. Die Triebstockritzel können nur synchron laufen, weil sie mit demselben Jack-Up-Bein mit beidseitig gleicher Verzahnung eingreifen. Voraussetzung für die Wirkung des Systems ist, dass die Motoren ausreichend Momentenreserve und eine steile Momentenkurve bei Betriebsdrehzahl haben.

Die vorliegende Erfindung hat gegenüber diesem in US 4,678,165 A beschriebenen Stand der Technik mehrere Vorteile. Während das in US 4,678,165 A beschriebene System eine Drehmomentgleichheit in beiden Triebstockritzeln bezweckt, wird mit der vorliegenden Erfindung eine definierte und minimale Lagerbelastung der Triebstockritzellagerung, eine gezielte Mindestlast der Planetenträgerlagerung der beiden parallelen Getrieben, eine kostengünstige Drehmomentabstützung sowie eine sehr dichte Stapelung der Getriebe erzielt.

Bei den Hubgerüsten ist es aus Kostengründen wichtig, dass die Triebstockritzel so nah wie möglich zueinander angeordnet sind, vor allem hinsichtlich ihrer vertikalen Anordnung übereinander. Aus diesem Grund sind Planetengetriebe im Vergleich zu Stirnradgetriebe bevorzugt, da sie bei gleichem Drehmoment kleiner bauen. Zudem wird zwischen den größten Manteldurchmessern von zwei übereinander angeordneten Planetengetrieben nur einer minimaler Freiraum gelassen. Bei dem in US 4,678,165 A beschriebenen Stand der Technik ist mit den vertikal angeordneten Drehmomentstützen der gewünschte kleine Mittenabstand von zwei übereinander angeordneten Planetengetrieben nicht möglich weil deren Stützlänge im Weg ist. Die mit einander gekuppelten Stützen können aber nicht horizontal angeordnet werden, weil die gegenseitige Abstützung mit Koppelstange nicht mehr funktionieren würde. Die vorliegende Erfindung löst dieses Problem dadurch, dass die Drehmomentstütze jeder Getriebeeinheit das Getriebegehäuse der jeweils anderen Getriebeeinheit zangenförmig umgreift.

Bei dem in US 4,678,165 A beschriebenen Stand der Technik ist im Falle einer Drehmomentbelastung das Gleichgewicht sofort gestört, wenn ein Motor von zwei miteinander gekoppelten Getrieben ausfällt, z.B. im Falle eines Stromausfalls. In diesem Fall rotieren beide Getriebe solange, bis sie irgendwo zum Anschlag kommen. Daher muss im Falle eines Ausfalls des ersten Motors das zweite Getriebe mittels eines Endschalter ebenfalls sofort drehmomentfrei gemacht werden, um Schäden zu vermeiden. Dieses Problem ist bei der vorliegenden Erfindung nicht gegeben.

Das an den Triebstockritzeln anstehende Drehmoment, resultierend aus einer Summe von anteiliger Gewichtskraft der zu hebenden Last und anteiligen Reibkräften in den Führungen der Zahnstange mal dem Wirkradius des Triebstockritzels zusammen mit den Reibmomenten in der Triebstockritzellagerung und Verlustmomenten im Getriebe müssen vom Motor aufgebracht werden. Wenn bei dem in US 4,678,165 A beschriebenen Stand der Technik der Momentenbedarf der beiden benachbarten Triebstockritzel, zum Beispiel in Folge von lokal unterschiedlichen Reibwerten der Führungen, geringfügig unterschiedlich ist und bleibt, drehen die Getriebe schleichend in eine Richtung, bis irgendetwas die Ausgleichsbewegung mechanisch blockiert. Das System ist somit instabil. Dieses Problem ist bei der vorliegenden Erfindung nicht gegeben.

Bei hohen Momenten in den Getrieben sind die Reaktionskräfte bei dem in US 4,678,165 A beschriebenen Stand der Technik an den Anbindepunkten der Koppelstange auch entsprechend groß.

Aufgrund des Gesetzes actio = reactio entstehen auf den Triebstockritzelwellen Reaktionskräfte, die von deren Lagerung abgefangen werden müssen, und die diese Lagerung zusätzlich belasten. Bei der vorliegenden Erfindung heben sich in Folge der "kämmenden" Drehmomente die Reaktionskräfte an den Drehmomentstützen und auf den Triebstockwellen weitestgehend gegenseitig auf. Bei gleichem Drehmoment in den zwei horizontalbenachbarten Getrieben heben sich dann die vertikalen Komponenten von Aktionskraft und Reaktionskraft auf und ist die Triebstockwelle, abgesehen vom Getriebegewicht und eine kleine horizontale Kraftkomponente, bis zum getriebeseitigen Pendelrollenlager frei von hohen Biegemomenten und hohen Radialkräften.

Weil die Elektromotoren der Getriebe üblicherweise auf der Triebstockritzelwelle seitlich vom Hubgerüst angeordnet sind, ist in Folge der Ausgleichsbewegungen, die bei dem in US 4,678,165 A beschriebenen Stand der Technik auftreten, mehr Platz zwischen Hubgerüst und Motor zu lassen als sonst üblich, um zu verhindern, dass der Motor gegen die Wand des Hubgerüsts schlägt. Die erfordert einen größeren Gesamtachsabstand bei den Vorschaltstufen der Planetengetriebe und führt somit zu höheren Kosten. Dieses Problem ist bei der vorliegenden Erfindung nicht gegeben.

Da oft mehrere Antriebspaare übereinander im Hubgerüst angeordnet sind, kann bei dem in US 4,678,165 A beschriebenen Stand der Technik eine Ausgleichsbewegung im ersten Getriebepaar das zweite Getriebepaar beeinflussen und es so zu einer gegenseitige Hochschaukelung der Ausgleichsbewegungen kommen. Dieses Problem ist bei der vorliegenden Erfindung nicht gegeben.

Das erfindungsgemäßen Getriebepaar, jetzt mit eigener Standard-Doppellagerung des Hauptplanetenträgers, können beim Serientest nach Standard-Vorgehensweise ohne Triebstocklagerung im Herstellerwerk geprüft werden.

Vorteilhafte Ausgestaltungen der Erfindung sind Gegenstand der Unteransprüche.

Es ist bevorzugt, dass die Getriebegehäuse im dem Bereich, in dem die Drehmomentstützen montiert sind und die Drehmomentstützen des jeweils anderen Getriebes aufliegen, einen kreisförmigen Querschnitt aufweisen. Gemäß einer bevorzugten Ausgestaltung weisen die Getriebegehäuse im Bereich ihres maximalen Durchmessers einen ringförmigen Flansch auf, an dem die Drehmomentstütze des jeweiligen Getriebegehäuses befestigt ist und auf dem die Abstützpunkte der jeweils anderen Drehmomentstütze liegen.

Der kreisförmige Querschnitt, insbesondere in Form eines ringförmigen Flansches, erleichtert die zangenförmige Umgreifung durch die Drehmomentstützen und die symmetrische Abstützung. Die konstruktive Gestaltung der gabelförmigen Drehmomentstützen lässt eine axiale Montage der Getriebe am Hubgerüst zu, und die Stützen eines Getriebepaares können gleich ausgeführt werden.

Gemäß einer bevorzugten Ausgestaltung beträgt der Winkel, der zwischen der durch die Abtriebsachse der jeweils anderen Getriebeeinheit verlaufenden Vertikalebene und der Strecke zwischen dieser Abtriebsachse und den Abstützpunkten gebildet ist, ca. 5 bis 10 Grad. Um eine dichte vertikale Stapelung der Getriebe am Hubgerüst zu erzielen, wird der Abstützpunkt der Stützen nicht genau in 12h- und 6h-Position gelegt, sondern ca. 5° bis 10° aus der Vertikalebene. Dies führt zu der vorher erwähnten horizontalen Kraftkomponente.

Dies bietet jedoch noch einen zusätzlichen Vorteil: Bedingt durch die axiale Schwerpunktlage des Getriebegewichtes, abzüglich des Hauptplanetenträgergewichts mit Planeten, Bolzen und Planetenradlager, ist das Planetenträgerlager der herkömmlichen Getriebe auf der Triebstockritzelseite in der Regel unterbelastet und ruht das Getriebegewicht fast zu 100% auf dem Planetenträgerlager auf der Seite der Getriebevorstufen. Nicht radial belastete Wälzlager haben unerwünschten Rollenschlupf, und dies ist laut den Wälzlagerherstellern nicht erlaubt.

Durch die Ausbildung des abtriebsseitigen Gehäuseflansches als Drehmomentstütze, nah am ersten Pendelrollenlager der Triebstockritzelwelle in Kombination mit einer Wirklinie unter ca. 5° bis 10° aus der Vertikalebene, entsteht erfindungsgemäß für das Hubgerüst-seitige Planetenträgerlager die geringe, vorher genannte Horizontalkraft aus der Summe der beiden horizontalen Komponenten der Aktions- und Reaktionskraft. Diese Horizontalkraft ist durch die Wahl des Winkels der Wirkrichtung der Reaktionskraft der Stützen, bezogen auf die Vertikale, zu beeinflussen, und dieses sonst zu gering belastete Lager ausreichend radial zu belasten.

Weiter vorteilhaft ist ein Zahnstangenantrieb zum Absenken und Anheben eines Jack-up-Beins eines Hubschiffes, umfassend eine mit dem Hubschiff verbindbare Tragstruktur mit kreisrunden Aussparungen symmetrisch zu beiden Seiten einer Linie, entlang der ein Jack-up-Bein mit daran montierten Zahnstangen bewegbar ist, ein Getriebepaar wie oben beschrieben, wobei das Getriebepaar radial von der Tragstruktur getrennt und verdrehbar in zwei horizontal benachbarten Aussparungen gelagert ist, zwei Motoren, die jeweils mit der Antriebsachse einer Getriebeeinheit verbunden sind, und zwei Triebstockritzel, die jeweils mit der Abtriebsachse einer Getriebeeinheit verbunden sind.

Gemäß einer bevorzugten Ausgestaltung reiten die Getriebegehäuse jeweils auf einer Zweifachlagerung des Planetenträgers der Planetenstufe.

Gemäß einer bevorzugten Ausgestaltung weisen die Getriebeeinheiten jeweils zwei Planetenstufen auf, wobei die Getriebegehäuse jeweils auf einer Zweifachlagerung des Planetenträgers der Planeten-Hauptstufe reiten.

Die Getriebegehäuse sind radial völlig vom Hubgerüst getrennt, wobei die Reaktionskräfte der einzelnen Stützen auf dem Flansch der Stütze des benachbarten Getriebes abgefangen werden. Die Getriebegehäuse reiten so zwangsfrei auf der üblichen Zweifachlagerung der Planetenträger der Getriebehauptstufe, wobei der Planetenträger nur über das Vielkeilprofil mit der Triebstockwelle verbunden ist und hier die radiale Führung und die Drehmomentübertragung des Getriebes stattfinden. Die Drehmomentstützen sind gabelförmig ausgeführt, da durch Absenken und Anheben der Jack-Up-Beine beide Drehmomentlastrichtungen auftreten.

Gemäß einer bevorzugten Ausgestaltung sind die abtriebsseitigen Gehäuseflansche jeweils im Bereich eines Pendelrollenlagers der Triebstockritzelwelle angeordnet.

Weiter vorteilhaft ist ein Hubschiff mit einem Zahnstangenantrieb wie oben beschrieben.

Weiter vorteilhaft ist eine Verwendung eines Getriebepaars wie oben beschrieben in einem Zahnstangenantrieb zum Absenken und Anheben eines Jack-up-Beins eines Hubschiffes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen schematisch:
- Fig. 1: eine Draufsicht eines Jack-Up-Beins mit einem Getriebepaar,
- Fig. 2: eine Seitenansicht eines Getriebepaars,
- Fig. 3: geometrische Details zur Lage der Abstützpunkte der Drehmomentstützen,
- Fig. 4: eine Seitenansicht eines einzelnes Getriebes,
- Fig. 5: in einer perspektivischen Darstellung eine Tragstruktur einer Hubvorrichtung für ein absenkbares Standbein eines Hubschiffes,
- Fig. 6: einen axialen Schnitt einer Planetengetriebestufe, und
- Fig. 7: eine Lagerung einer Triebstockritzelwelle in einem Getriebegehäuse.

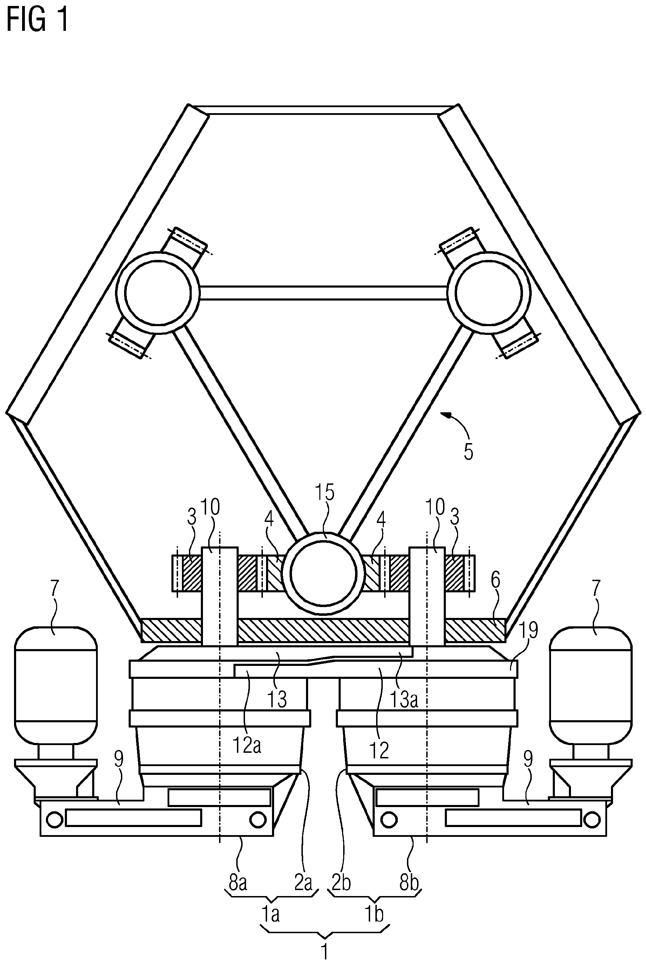

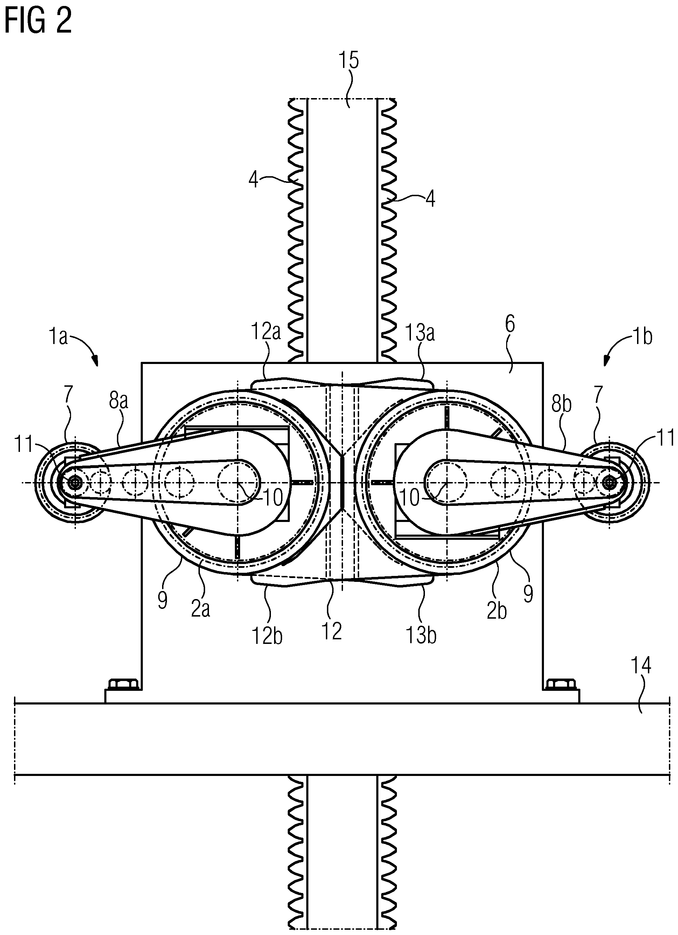

Fig. 1 und 2 zeigen eine Drehmomentabstützung eines Getriebepaars 1 umfassend zwei parallele Planetengetriebe 2a, 2b mit festem Mittenabstand und gegenläufiger Drehrichtung. Die Getriebekombination 1 dient dem Antrieb von Jack-Up-Systemen mittels Triebstockritzel 3 und Zahnstangen 4.

Bei Offshore-Arbeiten in begrenzten Wassertiefen werden in der Regel aus dem Wasser anhebbare Schiffe oder Arbeitsplattformen mit sogenannten Jack-Up-Systemen verwendet. Das Anheben und Absenken erfolgt mittels drei oder mehr vertikal bewegbaren Stelzen 5, sog. Standbeine oder Jack-Up-Beine, angetrieben mittels Zahnstangen 4 mit beidseitigen sogenannten Triebstockritzeln 3, wobei die Ritzel 3 in einer mit dem Arbeitsdeck verbundenen Tragstruktur 6 zur Lagerung der Getriebe, einem sog. Hubgerüst, drehbar gelagert sind und die Zahnstangen 4 fest mit den Stelzen 5 verbunden sind. Die Ritzel 3 treiben die Zahnstangen 4 an, wodurch die Stelzen 5 relativ zum Schiff oder zur Plattform verschoben werden. Die einzelnen Triebstockritzel 3 werden mittels Elektromotor 7 und Getrieben 1a, 1b angetrieben.

Die Stelzen 5 stützen sich in abgesenkter Position auf dem Meeresboden ab und heben anschließend das Schiff oder die Plattform aus dem Wasser, um so eine vom Wellengang unabhängige stabile Position zu erreichen. Während der Reise zwischen zwei Arbeitsstellen sind die Stelzen 5 in angehobener Position, wobei das Wasser das Schiff oder die Arbeitsplattform trägt.

Der Querschnitt der Stelzen 5 ist dreieckig oder viereckig; jede Stelze 5 umfasst drei bzw. vier parallel geschaltete Zahnstangensysteme. Das Anheben des Schiffes oder der Plattform aus dem Wasser erfordert sehr große Kräfte, die mittels Elektromotoren 7 in Kombination mit einem Getriebe 1a, 1b als Drehmomentverstärker im Zahneingriff der Triebstockritzel 3 mit der Zahnstange 4 generiert werden. Aus diesem Grund haben die Getriebe 1a, 1b eine große Übersetzung, z.B. im Bereich von 1 : 3500 bis 9000, und sind die Hubgeschwindigkeiten der Zahnstangen 4 gering, z.B. im Bereich von 0,5 bis 1 m/min, wodurch die gesamte zu installierende Motorleistung auf einem moderaten Niveau bleibt.

Neben den Umfangskräften in den Zahneingriffen, die die eigentliche Hebekraft erzeugen, werden auch durch den Druckwinkel der Verzahnungen sogenannte Spreizkräfte oder Abdrängkräfte erzeugt. Um die Abdrängkräfte zu neutralisieren, werden die Zahnstangen 4, die einen rechteckigen Querschnitt haben, beiderseits mit einem Verzahnungsprofil versehen und die Triebstockritzel 3 gleichzahlig beidseitig der Zahnstange 4 angeordnet. Jede Zahnstange 4 hat somit immer eine gerade Anzahl Ritzel 3 und somit auch eine gerade Anzahl Getriebe 1a, 1b.

Da die zu erzeugende Kräfte sehr groß sind, sind je Zahnstange 4 mehrere Ritzel 3 erforderlich; diese Ritzel 3 werden vertikal übereinander angeordnet. Die Größe der Getriebestufe mit dem höchsten Drehmoment der Getriebe 1a, 1b bestimmt den vertikalen Abstand der Ritzel 3. Da bei gleichem Drehmoment Planetengetriebe vom Volumen her kleiner bauen als Stirnradgetriebe, werden bei diesen Hubschiff-Anwendungen für die die Getriebegröße bestimmenden Stufen Planetenstufen 2a, 2b verwendet. Vorgeschaltet sind mehrere Stirnradstufen 8a, 8b, die lang gestreckt im Getriebegehäuse 9 liegen, so dass außer der Übersetzungsgenerierung auch ein gewisser Mindestabstand zwischen der Getriebeausgangswelle 10 und der Getriebeeingangswelle 11 erzielt wird. Dies ist erforderlich, damit die Motoren 7 seitlich außerhalb des Hubgerüsts 6 montiert werden können.

Die nebeneinander angeordneten Getriebe 1a, 1b werden in Links- und in Rechtsausführung gebaut. Die Getriebe 1a, 1b haben zwei Drehrichtungen und werden auch in zwei Drehmomentenrichtungen belastet. Die Höhe der Drehmomente ist je nach Lastrichtung bei Normalbetrieb ungleich.

Im Laufe der Zeit sind für diese Jack-Up-Systeme unterschiedliche konstruktive Lösungen entwickelt worden. Einerseits gibt es hydraulisch betriebene Systeme (pin & hole system). Andererseits gibt es elektromotorisch betriebene Zahnstangensysteme (rack & pinion system). Hinsichtlich der Lagerung der Triebstockritzel in Kombination mit Verbindungen zwischen Getriebe und Ritzellagerung und Anbindung der Getriebe am Hubgerüst kann man die rack & pinion-Systeme grob in zwei Varianten einteilen.

### Variante 1:

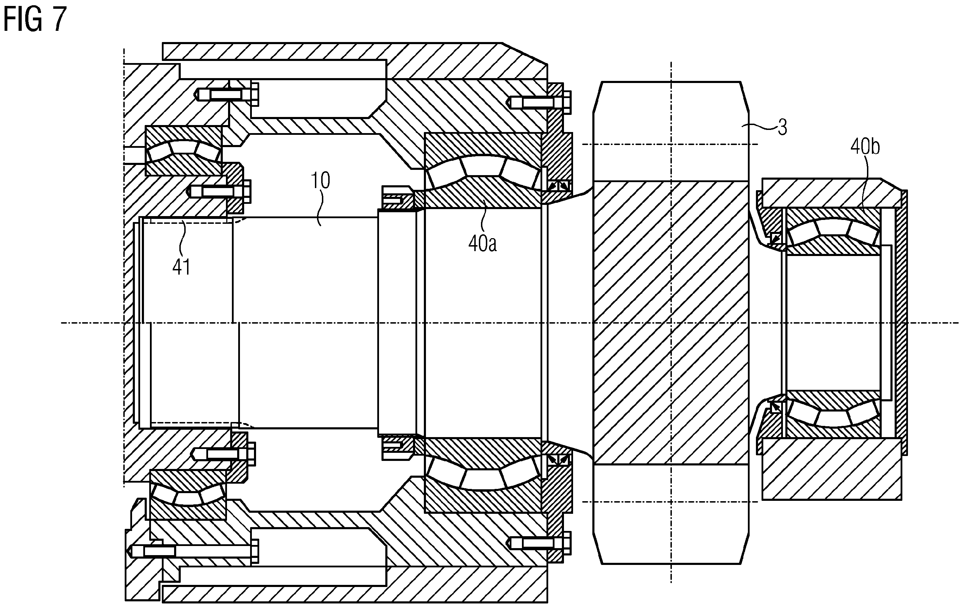

Die heute am weitesten verbreitete, in Fig. 7 dargestellte Variante 1 ist gekennzeichnet durch eine beidseitig in zwei Pendelrollenlagern 40a, 40b gelagerte Triebstockverzahnung, ausgebildet als Triebstockritzelwelle 10 mit einem antriebsseitigen Außenzahnwellenprofil 41, passend zu einem Innenzahnwellenprofil der nicht dargestellten Getriebehohlwelle. Die Getriebe werden somit auf der Ritzelwelle 10 aufgesteckt, und das Zahnwellenprofil 41 überträgt hierbei das Drehmoment.

Das getriebeseitige Pendelrollenlager 40a hat im Vergleich zum zweiten Pendelrollenlager 40b eine große Bohrung, weil hier das Triebstockritzeldrehmoment durchgeleitet werden muss. Außerdem wird der Lageraußenring in einer Buchse gehalten, um den Kopfkreis des Triebstockritzels, der in der Regel größer ist als der Lageraußendurchmesser, axial in das Hubgerüst stecken und so den Eingriff mit der Zahnstange herstellen zu können.

Das Getriebe wird radial mittels zylindrischer Zentrierung im Hubgerüst geführt. Das Reaktionsmoment des Getriebes wird mittels eines mit dem Hohlrad der Getriebehauptstufe verbundenen Flansches am Hubgerüst abgefangen. Dieser Flansch ist bei einer Untervariante oft in der Horizontalebene mit beidseitig symmetrisch zu der Getriebemitte angeordneten, bearbeiteten und parallelen Anschlagleisten versehen und hier mittels Passstücken spielfrei und drehfest mit dem Hubgerüst gekoppelt.

### Variante 2:

Bei der Variante 2 beinhaltet das Getriebe die Triebstockritzellagerung, wobei das Triebstockritzel "fliegend" auf der Getriebeausgangswelle angeordnet ist. Es fehlt das kleinere Pendelrollenlager auf der dem Getriebe gegenüberliegenden Seite. Das zweite Lager befindet sich dann entweder auf der Triebstockwelle im Getriebe oder sitzt auf der verzahnten Nabe des Planetenträgers. Die Anbindung des Getriebegehäuses oder der Drehmomentstütze ist wie bei Variante 1.

Beide beschriebene Varianten haben durch die oben genannte Anbindung der Getriebe am Hubgerüst keine technisch einwandfreie Drehmomentabstützung der Getriebe, und dies führt zu ungewollten Lager- und Zahnradbelastungen im Getriebe und zu undefinierten Lasten in den beiden Pendelrollenlagern bei Variante 1. Dies ist auf folgende Tatsachen zurückzuführen: Bei beiden Varianten 1 und 2, bei denen das Reaktionsmoment mittels Vierkantflansch mit beidseitigen Anschlagleisten abgefangen wird, werden mittels Passstücken zwischen den Anschlagleisten und Stützflächen am Hubgerüst die Getriebe in Umfangsrichtung steif mit dem Hubgerüst verbunden. Das Hubgerüst und das Getriebegehäuse bilden eine Einheit, als wäre die Kombination aus einem Stück.

Bei Drehmomentübertragung ist die Vielkeilverbindung zwischen der Nabe des Planetenträgers im Getriebe und der Triebstockwelle durch die hier auftretenden Zahnkräfte biegesteif und in der Lage, Biegemomente zu übertragen. Bei der Variante 1 bilden so Planetenträger und Triebstockwelle eine vierfach gelagerte Welle (zwei Pendelrollenlager des Triebstockritzels und zwei Zylinderrollenlager des Planetenträgers).

Bedingt durch unterschiedliches Betriebsspiel in diesen Lagern, Elastizität der Bauteile, Rundlaufabweichungen und Winkelabweichungen zur Drehachse der Zahnwellenprofile und Koaxialitätsabweichungen der Bohrungen im Hubgerüst entstehen undefinierte Zustände hinsichtlich Lagerkräften und Biegemomenten in der Vielkeilverbindung. In der Vielkeilverbindung können somit auch Mikrobewegungen und demzufolge Passungsrost und Verschleiß auftreten.

Eine mögliche Lösung bestünde darin, die Lagerung des Planetenträgers entfallen zu lassen und den Planetenträger "fliegend" auf der Triebstockwelle zu montieren. In diesem Fall bekommt jedoch der Träger einen Mittenversatz zur Innenverzahnung und dem Zentralritzel (= Sonne) in Folge des Lagerspiels der Pendelrollenlager, und der Planetenträger mit den Planeten stellt sich, bezogen auf die Innenverzahnung und das Zentralritzel, infolge der Durchbiegung des Triebstockritzels auch schräg. Daher ist diese Lösung nicht akzeptabel.

Ein weiterer Nachteil hierbei ist, dass man das Getriebe nur in Kombination mit dem Triebstockritzel und seinen beiden Pendelrollenlagern einem Funktionstest unterziehen kann.

Bei der Variante 2 gilt das Gleiche. Man hat, wenn abtriebsseitiges Planetenträgerlager und getriebeseitiges Triebstockwellenlager zu einem Lager zusammengefasst sind, immer noch eine Dreifachlagerung mit den gleichen Nachteilen wie oben beschrieben.

Durch die fliegende Anordnung der Triebstockverzahnung ist die elastische Verformung der Triebstockwelle sehr groß und würde bei einer Zweifachlagerung mit ebenfalls "fliegend" angeordnetem Planetenträger ebenfalls zu großem Mittenversatz und einer Schiefstellung des Planetenträgers führen.

Abgesehen von diesen technischen Nachteilen sind auch die Kosten hoch im Vergleich zu der erfindungsgemäßen Lösung.

Fig. 1 und 2 zeigen eine Draufsicht bzw. eine Seitenansicht eines Zahnstangenantriebs mit einem erfindungsgemäßen Getriebepaars 1. Es handelt sich dabei um ein Hubschiff-Getriebepaar 1 für einen Zahnstangenantrieb zum Absenken und Anheben eines Jack-up-Beins eines Hubschiffes. Jedes Getriebe 1a, 1b des Getriebepaars 1 umfasst ein zwei Planetenstufen umfassendes Planetengetriebe 2a, 2b sowie ein dem Planetengetriebe 2a, 2b vorgelagertes mehrstufiges Stirnradgetriebe 8a, 8b. Über ein die Planetenstufen umgebendes, zylinderförmiges Getriebegehäuse ist jedes der Getriebe 1a, 1b in kreisrunden Aussparungen des Hubgerüsts 6 gelagert. Die Antriebswellen 11 der Getriebe 1a, 1b sind jeweils mit Elektromotoren 7a, 7b verbunden. Die Abtriebswellen 10 der Getriebe 1a, 1b sind jeweils mit Triebstockritzel 3 verbunden. Die Triebstockritzel 3 kämmen jeweils mit einer Zahnstange 4, die an gegenüberliegenden Seiten der Standbeinkante 15 angebracht sind. Jedes Standbein 5 ist als eine fachwerkartige Gerüststruktur ausgebildet, deren Einhüllende etwa die Struktur eines Prismas mit einer dreieckigen Grundfläche hat. Jedes Standbein 5 weist sechs Zahnstangen 4 auf, die parallel zueinander entlang jeweils einer der drei vertikalen Standbeinkanten 15 des Standbeins 5 verlaufen.

Die Achsen der Abtriebswellen 10 sind parallel ausgerichtet, damit das gegenläufige Kämmen der Ritzel 3 in den Zahnstangen 4 gleich große, aber entgegen gerichtete Reaktionsdrehmomente erzeugt. Diese Reaktionsdrehmomente stützen die beiden Getriebe 1a, 1b mittels Drehmomentstützen 12, 13 auf dem Getriebegehäuse des jeweils anderen Getriebes 1b, 1a ab. Jede der Drehmomentstützen 12, 13 ist an einem ringförmigen Flansch 19 befestigt, der jeweils an dem Außenumfang desjenigen Teils des die zweite Planetenstufe umgebenden Getriebegehäuses angeordnet ist. Die Drehmomentstützen 12, 13 sind zangenförmig ausgebildet, wobei die beiden Zangenarme 12a, 12b bzw. 13a, 13b zu beiden Seiten einer horizontalen Mittelachse der Getriebe 1a, 1b, die durch eine Verbindungsgerade der Mittelpunkte der Abtriebswellen 10 gebildet wird, auf den Getriebegehäuse 9 aufliegen.

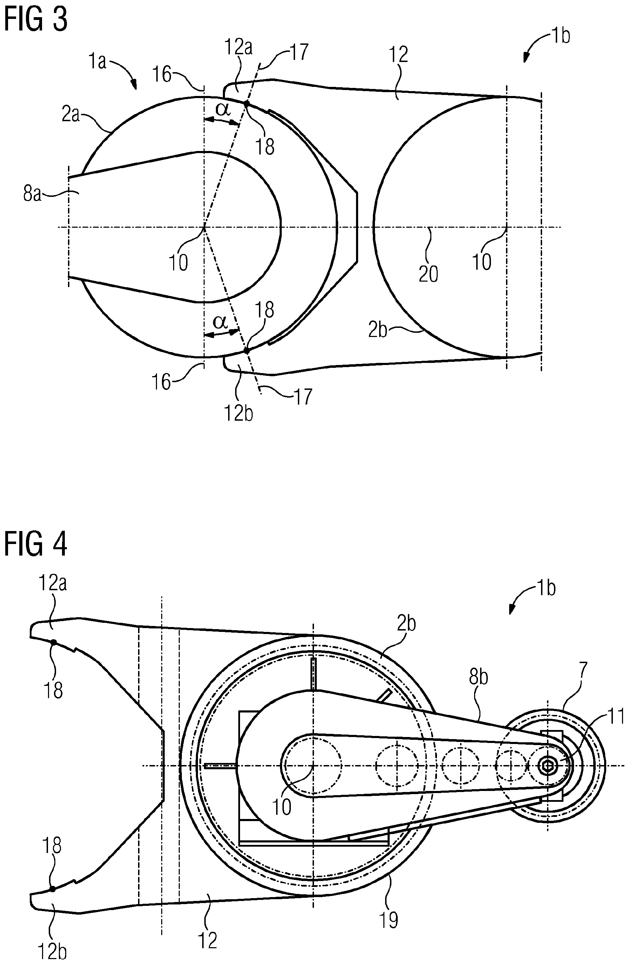

Fig. 3 zeigt die Lage der Zangenarme 12a, 12b der Drehmomentstütze 12 bezüglich des Getriebegehäuses des Planetengetriebes 2a. Die Abstützpunkte 18 der Zangenarme 12a, 12b liegen bezüglich einer durch die Abtriebswelle 10 der jeweils anderen Getriebeeinheit 2a verlaufenden Vertikalebene 16 zu der die Drehmomentstütze 12 aufweisenden Getriebeeinheit 2b hin. Dabei liegt der Winkel α, der zwischen der durch die Abtriebswelle 10 der jeweils anderen Getriebeeinheit 2a verlaufenden Vertikalebene 16 und der Strecke 17 zwischen dieser Abtriebswelle 10 und den Abstützpunkten 18 eingeschlossen wird, in einem Bereich von 5 bis 10 Grad. Eine Verbindungsgerade 20, die durch die Mittelpunkte der Abtriebswellen 10 der beiden Getriebeeinheiten 1a, 1b läuft, bildet eine Mittelachse, bezüglich derer die Abstützpunkte 18 symmetrisch angeordnet sind.

Fig. 4 zeigt zur Verdeutlichung eine Seitenansicht eines einzelnen Getriebes 1b eines erfindungsgemäßen Getriebepaars. Das Getriebe 1b weist ein mehrstufiges Stirnrad-Vorgelege 8b auf, dessen Ausgangswelle mit einer Eingangswelle eines zweistufigen, koaxialen Planetengetriebes 2b gekoppelt ist. Die Eingangswelle 11 der Stirnrad-Vorstufe 8b ist mit einer Rotorwelle eines Elektromotors 7 verbunden.

Die über einen ringförmigen Flansch 19 mit dem Getriebegehäuse des Planetengetriebes 2b verbundene Drehmomentstütze 12 gabelt sich in zwei zangenförmige Arme 12a, 12b mit innenseitigen Abstützpunkten 18.

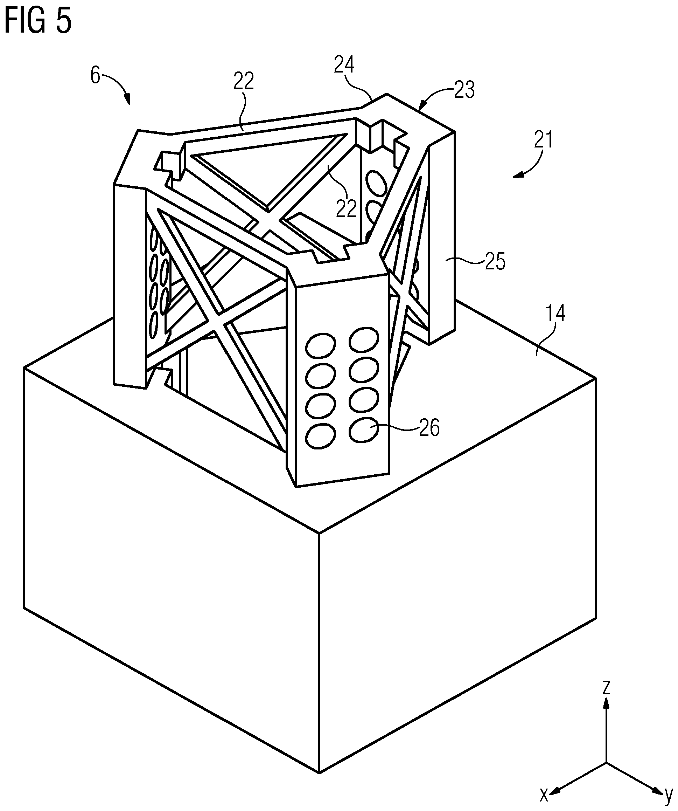

Figur 5 zeigt ein Hubgerüst 6 einer Hubvorrichtung schematisch in einer perspektivischen Darstellung. Das auf einem Hubschiff 14 montierte Hubgerüst 6 weist drei Stützrahmen 21 auf, die untereinander durch Verbindungselemente 22 fachwerkartig miteinander verbunden sind. Die Stützrahmen 21 sind jeweils benachbart zu einer der Standbeinkanten des jeweiligen Standbeins (siehe Fig. 1), so dass eine Längsachse des Stützrahmens 21 parallel zu dieser Standbeinkante 15 und damit auch parallel zu der entlang dieser Standbeinkante 15 verlaufenden Zahnstange des Standbeins 5 verläuft.

Der Stützrahmen 21 weist eine Rückwand 23 und zwei von der Rückwand 23 abgewinkelte Seitenwände 24, 25 auf. Die Rückwand 23 weist acht durchgehende, kreisförmige Aussparungen 26 auf, die zur Aufnahme jeweils einer Getriebeeinheit 1a, 1b des Zahnstangenantriebs der zugehörigen Hubvorrichtung ausgebildet sind. Die Aussparungen 26 sind in Form einer Matrix mit zwei nebeneinander angeordneten Reihen angeordnet, wobei jede Reihe vier übereinander angeordnete Aussparungen 26 aufweist.

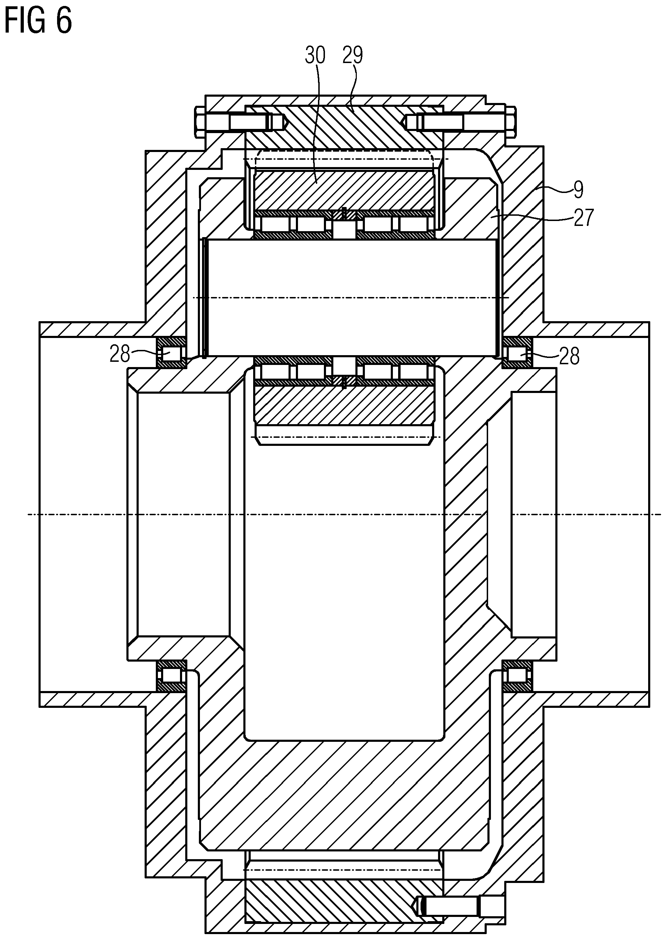

Fig. 6 zeigt ein Getriebegehäuse 9, welches auf einer Zweifachlagerung 28 eines Planetenträgers 27 einer Planetenstufe des erfindungsgemäßen Getriebepaars 1 reitet. Dabei kämmt ein in dem Planetenträger 27 drehbar gelagertes Planetenrad 30 mit einer Innenverzahnung eines radial in dem Getriebegehäuse 9 angeordneten Hohlrads 29.

## Patentansprüche

1. Hubschiff-Getriebepaar (1) für einen Zahnstangenantrieb zum Absenken und Anheben eines Jack-up-Beins (5) eines Hubschiffes (14), umfassend zwei Getriebeeinheiten (1a, 1b) mit jeweils einer Antriebswelle (11) zur Verbindung mit einem Antrieb (7) und jeweils einer Abtriebswelle (10) zur Verbindung mit einem Triebstockritzel (3) zum Eingriff in eine von zwei an dem Jack-up-Bein (5) montierten Zahnstangen (4), wobei jede der mit gegenläufigen Drehrichtungen abtreibenden Getriebeeinheiten (1a, 1b) eine in einem Getriebegehäuse (9) gelagerte Planetenstufe (2a, 2b) aufweist und sich mithilfe einer Drehmomentstütze 12, 13) an der jeweils anderen Getriebeeinheit (1b, 1a) abstützt,
**dadurch gekennzeichnet,**
**dass** die Drehmomentstütze (12, 13) jeder Getriebeeinheit (1a, 1b) das Getriebegehäuse (9) der jeweils anderen Getriebeeinheit (1b, 1a) zangenförmig umgreift und symmetrisch zu einer Verbindungsgeraden (20) der Abtriebswellen (10) in zwei Abstützpunkten (18) kontaktiert, die bezüglich einer durch die Abtriebswelle (10) der jeweils anderen Getriebeeinheit (1a, 1b) verlaufenden Vertikalebene (16) zu der die Drehmomentstütze (12, 13) aufweisenden Getriebeeinheit (1a, 1b) hin versetzt liegen, so dass die Abstützpunkte (18) zwischen den durch die Abtriebswellen (10) der Getriebeeinheiten (1a, 1b) verlaufenden Vertikalebenen (16) liegen.

2. Hubschiff-Getriebepaar (1) nach Anspruch 1, wobei die Getriebegehäuse (9) im dem Bereich, in dem die Drehmomentstützen (12, 13) montiert sind bzw. aufliegen, einen kreisförmigen Querschnitt aufweisen.

3. Hubschiff-Getriebepaar (1) nach Anspruch 1 oder 2, wobei der Winkel (α) zwischen der durch die Abtriebswelle (10) der jeweils anderen Getriebeeinheit (1a, 1b) verlaufenden Vertikalebene (16) und der Strecke (17) zwischen dieser Abtriebswelle (10) und den Abstützpunkten (18) in einem Bereich von 5 bis 10 Grad liegt.

4. Hubschiff-Getriebepaar (1) nach einem der vorhergehenden Ansprüche, wobei die Getriebegehäuse (9) im Bereich ihres maximalen Durchmessers einen ringförmigen Flansch (19) aufweisen, an dem die Drehmomentstütze (12, 13) des jeweiligen Getriebegehäuses (9) befestigt ist und auf dem die Abstützpunkte (18) der jeweils anderen Drehmomentstütze (12, 13) liegen.

5. Zahnstangenantrieb zum Absenken und Anheben eines Jack-up-Beins (5) eines Hubschiffes (14), umfassend
- eine mit dem Hubschiff (14) verbindbare Tragstruktur (6) mit kreisrunden Aussparungen (26) symmetrisch zu beiden Seiten einer Linie, entlang der ein Jack-up-Bein (5) mit daran montierten Zahnstangen (4) bewegbar ist;
- ein Hubschiff-Getriebepaar (1) nach einem der vorhergehenden Ansprüche, wobei das Getriebepaar (1) radial von der Tragstruktur (6) getrennt und verdrehbar in zwei horizontal benachbarten Aussparungen (26) gelagert ist;
- zwei Motoren (7), die jeweils mit der Antriebswelle (11) einer Getriebeeinheit (1a, 1b) verbunden sind;
- zwei Triebstockritzel (3), die jeweils mit der Abtriebswelle (10) einer Getriebeeinheit (1a, 1b) verbunden sind.

6. Zahnstangenantrieb nach Anspruch 5, wobei die Getriebegehäuse (9) jeweils auf einer Zweifachlagerung des Planetenträgers (der Planetenstufe (2a, 2b) reiten.

7. Zahnstangenantrieb nach Anspruch 6, wobei die Getriebeeinheiten (1a, 1b) jeweils zwei Planetenstufen (2a, 2b) aufweisen, wobei die Getriebegehäuse (9) jeweils auf einer Zweifachlagerung (28) des Planetenträgers (27) der Planeten-Hauptstufe reiten.

8. Zahnstangenantrieb nach einem der Ansprüche 5 bis 7, wobei die abtriebsseitigen Gehäuseflansche (19) jeweils im Bereich eines Pendelrollenlagers der Triebstockritzelwelle angeordnet sind.

9. Hubschiff (14) mit einem Zahnstangenantrieb nach einem der Ansprüche 5 bis 8.

10. Verwendung eines Hubschiff-Getriebepaars (1) nach einem der Ansprüche 1 bis 4 in einem Zahnstangenantrieb zum Absenken und Anheben eines Jack-up-Beins (5) eines Hubschiffs (14).

## Claims

1. Gear pair for a lifting vessel (1) for a rack and pinion drive for lowering and raising a jack-up leg (5) of a lifting vessel (14), comprising two gear units (1a, 1b) each having a drive shaft (11) for connection to a drive (7) and an output shaft (10) for connection to a drive pinion (3) for engagement in one of two tooth racks (4) fitted on the jack-up leg (5), wherein each of the gear units (1a, 1b) with output in opposite directions of rotation has a planetary stage (2a, 2b) mounted in a transmission housing (9) and is supported with the aid of a torque support (12, 13) on the other respective gear unit (1b, 1a),
**characterised in that**
the torque support (12, 13) of each gear unit (1a, 1b) surrounds the transmission housing (9) of the other respective gear unit (1b, 1a) in a pincer-like manner and contacts the housing (9) symmetrically with respect to a straight line (20) connecting the output shafts (10) at two support points (18) which relative to a vertical plane (16) extending through the output shaft (10) of the other respective gear unit (1a, 1b) are located offset towards the gear unit (1a, 1b) which has the torque support (12, 13), so that the support points (18) are located between the vertical planes (16) extending through the output shafts (10) of the gear units (1a, 1b).

2. Gear pair for a lifting vessel (1) according to claim 1, wherein the transmission housing (9) in the area in which the torque supports (12, 13) are mounted or fitted has a ring-shaped cross-section.

3. Gear pair for a lifting vessel (1) according to claim 1 or 2, wherein the angle (α) between the vertical plane (16) extending through the output shaft (10) of the other respective gear unit (1a, 1b) and the section (17) between this output shaft (10) and the support points (18) is in the range of 5 to 10 degrees.

4. Gear pair for a lifting vessel (1) according to one of the preceding claims, wherein the transmission housing (9) has a ring-shaped flange (19) in the region of its maximum diameter, to which the torque support (12, 13) of the respective transmission housing (9) is fastened and at which the support points (18) of the other respective torque support (12, 13) are located.

5. Rack and pinion drive for lowering and raising of a jack-up leg (5) of a lifting vessel (14), comprising
- a support structure (6) which can be connected to the lifting vessel (14) with symmetrical circular recesses (26) on both sides of a line, along which a jack-up leg (5) with mounted toothed racks (4) can be moved;
- a gear pair for a lifting vessel (1) according to one of the preceding claims, wherein the gear pair (1) is radially separated from the support structure (6) and can be rotated in two horizontally adjacent recesses (26);
- two motors (7) which are each connected to the drive shaft (11) of a gear unit (1a, 1b);
- two drive pinions (3) which are each connected to the output shaft (10) of a gear unit (1a, 1b).

6. Rack and pinion drive according to claim 5, wherein the transmission housing (9) is respectively mounted on a double bearing of the planetary carrier (the planetary stage (2a, 2b)).

7. Rack and pinion drive according to claim 6, wherein the gear units (1a, 1b) each have two planetary stages (2a, 2b), wherein the transmission housing (9) is respectively mounted on a double bearing (28) of the planetary carrier (27) of the planetary main stage.

8. Rack and pinion drive according to one of claims 5 to 7, wherein the housing flanges (19) on the output side are each arranged in the region of a spherical roller bearing of the drive pinion shaft.

9. Lifting vessel (14) with a rack and pinion drive according to one of claims 5 to 8.

10. Use of a gear pair for a lifting vessel (1) according to one of claims 1 to 4 in a rack and pinion drive for lowering and raising of a jack-up leg (5) of a lifting vessel (14).

## Revendications

1. Paire (1) d'engrenages de navire auto-élévateur pour un entraînement à crémaillère en vue d'abaisser et de lever une jambe (5)de jack-up d'un navire (14) auto-élévateur, comprenant deux unités (1a, 1b) d'engrenage ayant chacune un arbre (11) menant de liaison à un entraînement (7) et un arbre (10) mené de liaison à un pignon (3) de fuseau pour engrener dans l'une de deux crémaillères (4) montées sur la jambe (5) de jack-up, chacune des unités (1a, 1b) d'engrenage, à sortie dans des sens de rotation contraires, ayant un étage (2a, 2b) satellite monté dans un carter (9) d'engrenage et s'appuyant, à l'aide d'un bras ( 12, 13) de réaction, sur l'autre unité (1b, 1a) d'engrenage,
**caractérisée**
**en ce que** les bras (12, 13) de réaction de chaque unité (1a, 1b) d'engrenage enserrent, en forme de pince, le carter (9) d'engrenage de l'autre unité (1b, 1a) d'engrenage et la contactent, d'une manière symétrique par rapport à une droite (20) de liaison des arbres (10) menés, en deux points (18) d'appui, qui, par rapport à un plan (16) vertical passant par l'arbre (10) mené de l'autre unité (1a, 1b) d'engrenage, sont décalées vers l'unité (1a, 1b) d'engrenage ayant les bras (12, 13) de réaction, de sorte que les points (18) d'appui se trouvent entre les plans (16) verticaux, passant par les arbres (10) menés des unités (1a, 1b) d'engrenage.

2. Paire (1) d'engrenages de navire auto-élévateur suivant la revendication 1, dans laquelle les carters (9) d'engrenage ont une section transversale circulaire dans la partie dans laquelle les bras 12, 13) de réaction sont montés ou s'appliquent.

3. Paire (1) d'engrenages de navire auto-élévateur suivant la revendication 1 ou 2, dans laquelle l'angle (α), entre le plan (16) vertical passant par l'arbre (10) mené de l'autre unité (1a, 1b) d'engrenage, et la section (17), entre cet arbre (10) mené et les points (18) d'appui, est dans une plage allant de 5 à 10 degrés.

4. Paire (1) d'engrenages de navire auto-élévateur suivant l'une des revendications précédentes, dans laquelle les carters (9) d'engrenage ont, dans la partie de leur diamètre maximum, une bride (19) annulaire à laquelle le bras (12, 13) de réaction du carter (9) d'engrenage respectif est fixé et sur laquelle les points (18) d'appui (12, 13) de l'autre bras (12, 13) de réaction s'appliquent.

5. Entraînement à crémaillère pour abaisser et lever une jambe (5) de jack-up d'un navire (14) auto-élévateur, comprenant
- une structure (6) porteuse, pouvant être reliée au navire ( 14) auto-élévateur et ayant des évidements (26) circulaires, symétriquement par rapport aux deux côtés d'une ligne, le long de laquelle une jambe (5) de jack-up, avec des crémaillères (4) qui y sont montées, peut se déplacer ;
- une paire (1) d'engrenages de navire auto-élévateur suivant l'une des revendications précédentes, la paire (1) d'engrenages étant montée séparée radialement de la structure (6) porteuse et pouvant tourner dans deux évidements (26) voisins horizontalement ;
- deux moteurs (7), reliés respectivement à l'arbre (11) menant d'une unité (1a, 1b) d'engrenage ;
- deux pignons (3) de fuseau, reliés respectivement à l'arbre (10) menant d'une unité (1a, 1b) d'engrenage.

6. Entraînement à engrenage suivant la revendication 5, dans lequel les carters (9) d'engrenage chevauchent un support double de la cage de transmission satellite de l'étage (2a, 2b) satellite.

7. Entraînement à engrenage suivant la revendication 6, dans lequel les unités (1a, 1b) d'engrenage ont chacune deux étages (2a, 2b) satellites, les carters (9) d'engrenage chevauchant respectivement un support (28) double de la cage (27) de transmission de l'étage principal satellite.

8. Entraînement à engrenage suivant l'une des revendications 5 à 7, dans lequel les brides (19) de carter, du côté de la sortie, sont disposées respectivement dans la partie d'un palier à roulement à rouleau articulé de l'arbre du pignon de fuseau.

9. Navire (14) auto-élévateur ayant un entraînement à crémaillère suivant l'une des revendications 5 à 8.

10. Utilisation d'une paire (1) d'engrenage de navire auto-élévateur suivant l'une des revendications 1 à 4, dans un entraînement à crémaillère pour abaisser et lever une jambe (5) de jack-up d'un navire (14) auto-élévateur.
